# EUROPEAN PATENT APPLICATION

(11) **EP 3 641 223 A1**
(43) Date of publication of application: **22.04.2020**
(21) Application number: 17918803.2
(22) Date of filing: 25.07.2017
(51) Int. Cl.: H04L 12/26, H04W 72/12

(54) **METHOD FOR ACQUIRING QOE INFORMATION, AND TERMINAL AND NETWORK DEVICE**

(71) Applicant: Huawei Technologies Co., Ltd., Longgang District Shenzhen, Guangdong 518129 (CN)
(72) Inventor: MIAO, Jinhua, Shenzhen Guangdong 518129 (CN); ZHANG, Jian, Shenzhen Guangdong 518129 (CN); TANG, Xun, Shenzhen Guangdong 518129 (CN)
(74) Representative: Thun, Clemens
(86) International application number: PCT/CN2017/094265
(87) International publication number: WO 2019/019007

(57) **Abstract**

This application discloses a method for obtaining QoE information, a terminal, and a network device. The method may include: receiving, by a terminal, a QoE information reporting policy delivered by a network device; and reporting the QoE information to the network device based on the QoE information reporting policy, so as to enable the network device to schedule radio resources based on the reported QoE information, and the radio resources are used to transmit video service information for the terminal. By implementing this application, the network device can know a video status based on the QoE information reported by the terminal, schedule the radio resources for the video service of the terminal, ensure that a video can be normally played, and improve user experience, so as to improve a QoE.

## Description

### TECHNICAL FIELD

This application relates to the field of wireless communications technologies, and in particular, to a method for obtaining QoE information, a terminal, and a network device.

### BACKGROUND

With the rapid development of mobile Internet services, more users begin to use an intelligent terminal to watch video on-live or video on demand. A streaming media service that simultaneously transmits and plays, such as video on-live and video on demand, has a great quantity of resources requirements, and is a big focus for mobile communications. However, it is difficult for the mobile communications to efficiently manage and allocate radio resources.

Currently, the radio resources are managed and allocated mainly based on a quality of experience (quality of experience, QoE) of a user to resolve problems such as network latency, blocking, or the like. The QoE is defined as a real perceived level of a user on a service, and directly reflects a recognition level of the user on performance of a service provided by a mobile network.

A method for evaluating the QoE mainly includes two following types:
First, a user subjective evaluation score is reported. A measurement personnel uses a given streaming media service, and subjectively scores the service based on a mean opinion score (mean opinion score, MOS) method. As shown in Table 1, the MOS method divides a subjective perception of the QoE into five levels. This evaluation method costs a great quantity of time, and it is difficult to obtain a consistent evaluation result among all measurement personnel.Table 1 Mean opinion score

| MOS | QoE | Damaging level |
|---|---|---|
| 5 | Perfect | Unperceived |
| 4 | Very good | Perceived but not severe |
| 3 | Good | Slightly |
| 2 | Not bad | Severe |
| 1 | Bad | Very severe |

Second, objective deduction is performed by using device performance indicators. A network key performance indicator (key performance indicator, KPI) is mapped to the QoE by using a mapping model. The KPI includes network performance indicators such as a packet loss rate, a bit error rate, jitter, latency, and the like. The KPI is a performance indicator of a network element, and cannot be simply mapped in mathematical relation to the QoE. Therefore, the method is inaccurate. In addition, the KPI reflects a network condition rather than a quality of a streaming media service. Therefore, a network device side cannot schedule the radio resources based on the quality of the streaming media.

### SUMMARY

In embodiments of this application, a method for obtaining QoE information, and related devices are provided. The network device can schedule, based on the QoE information reported by a terminal, radio resources for a video service of the terminal, ensure that a video can be normally played, and improve user experience, so as to improve a QoE.

According to a first aspect, this application provides a method for obtaining QoE information, and the method is applied in a terminal side and includes: receiving, by a terminal, a QoE information reporting policy delivered by a network device; and reporting the QoE information to the network device based on the QoE information reporting policy, so as to enable the network device to schedule radio resources based on the reported QoE information.

In an optional embodiment, the terminal receives a QoE information measurement policy delivered by the network device; and measures the QoE information based on the QoE information measurement policy.

Specifically, the terminal receives QoE configuration information delivered by the network device, where the QoE configuration information includes at least one of the QoE information measurement policy and the QoE information reporting policy. The QoE configuration information may be implemented as radio resource control (Radio Resource Control, RRC) signaling.

In this application, the QoE information measurement policy includes at least one of measurement content and a measurement period. The measurement content may reflect a video quality, and is a related parameter of the video. The measurement content may include: at least one of a video cache size, a video total size, video segment information, and a video playing state, where video segment data includes information of at least one segment, data of the one segment includes at least one of a segment size and a starting and stopping time, and the video playing state is an urgency state or a non-urgency state. The measurement period is used to indicate a period length that is of the QoE information and that is measured by the terminal.

It can be understood that the QoE information reporting policy includes at least one of reporting content and a reporting period. The reporting content and the reporting period are similar to the foregoing measurement content and measurement period, and details are not described herein again.

In an optional embodiment, before the receiving, by a terminal, a QoE information reporting policy delivered by a network device, the method further includes: notifying, by the terminal, the network device that a current service type is a video service, so as to enable the network device to allocate initialized radio resources to the terminal, where the initialized radio resources are used in initialized caching of the video service of the terminal.

In this case, the terminal may notify the network device in the following manners that the current service type is the video service:
firstly, establishing, by the terminal, a default bearer with the network device, and notifying, by using RRC signaling, the network device that the current service type is the video service, or notifying, by using a preset flow ID, the network device that the current service type is the video service;
secondly, establishing, by the terminal, a dedicated bearer with the network device, and notifying, by using a preset flow ID, the network device that the current service type is the video service; or
thirdly, reporting, by the terminal, an initialized data packet type to the network device, so as to notify the network device that the current service type is the video service.

According to a second aspect, this application provides a method for obtaining QoE information, and the method is applied in a network device side and includes: delivering, by a network device, a QoE information reporting policy to a terminal; receiving the QoE information reported based on the QoE information reporting policy by the terminal; and scheduling radio resources based on the reported QoE information.

In an optional embodiment, the network device delivers a QoE information measurement policy to the terminal.

In this case, the QoE information measurement policy and the QoE information reporting policy may refer to related descriptions in the first aspect.

In an optional embodiment, the scheduling, by the network device, radio resources based on specific content of the reported QoE information may include the following cases:
Firstly, in a case in which the reporting content includes the video cache size, when the video cache size is less than a first preset threshold, the radio resources are increased to transmit video service information of the terminal; or when the video cache size is greater than the first preset threshold, the radio resources are decreased or maintained to transmit video service information of the terminal.
Secondly, in a case in which the reporting content includes the video cache size and the video total size, when a ratio of the video cache size to the video total size is less than a second preset threshold, the radio resources are increased to transmit video service of the terminal; or when a ratio of the video cache size to the video total size is greater than a second preset threshold, the radio resources are decreased or maintained to transmit video service of the terminal.
Thirdly, in a case in which the reporting content includes the video playing state, when the video playing state is an urgency state, the radio resources are increased to transmit video service of the terminal; or when the video playing state is a non-urgency state, the radio resources are decreased or maintained to transmit video service of the terminal.

It can be understood that the radio resources are maintained by the network device to transmit the video service of the terminal means that the network device does not configure more radio resources to the terminal, and does not decrease the radio resources already configured to the terminal, so that the radio resources used by the terminal to transmit the video service maintains unchanged.

In an optional embodiment, the network device may receive a notification sent by the terminal that a current service type is a video service, and allocate initialized radio resources to the terminal based on the notification, where the initialized radio resources are used in initialized caching of the video service of the terminal. In this case, a specific implementation of that the network device may receive a notification sent by the terminal that a current service type is a video service may refer to related descriptions in the first aspect.

According to a third aspect, this application provides a terminal configured to perform the method described in the first aspect. The terminal may include: a memory, and a processor, a transmitter, and a receiver that are coupled to the memory. The transmitter is configured to send a signal to a network device or the another terminal. The receiver is configured to receive a signal sent by the network device or another terminal. The memory is configured to store implementation code in the method described in the first aspect. The processor is configured to execute the program code stored in the memory, that is, perform the method provided by any one of the first aspect or the possible implementations in the first aspect.

According to a fourth aspect, this application provides a network device configured to perform the method described in the second aspect. The network device may include: a memory, and a processor, a transmitter, and a receiver that are coupled to the memory. The transmitter is configured to send a signal to another network device or a terminal. The receiver is configured to receive a signal sent by the another network device or the terminal. The memory is configured to store implementation code in the method described in the second aspect. The processor is configured to execute the program code stored in the memory, that is, perform the method provided by any one of the second aspect or the possible implementations in the second aspect.

According to a fifth aspect, a terminal is provided, including a receiving unit and a sending unit, where
the receiving unit is configured to receive a QoE information reporting policy delivered by a network device; and
the sending unit is configured to report QoE information to the network device based on the QoE information reporting policy, so as to enable the network device to schedule radio resources based on the reported QoE information.

It can be understood that function units included in the terminal may be configured to perform the method in the first aspect, and specific descriptions may refer to the foregoing descriptions.

According to a sixth aspect, a network device is provided, including a receiving unit, a sending unit, and a processing unit, where
the sending unit is configured to deliver a QoE information reporting policy to a terminal;
the receiving unit is configured to receive QoE information reported based on the QoE information reporting policy by the terminal; and
the processing unit is configured to schedule radio resources based on the reported QoE information, and the radio resources are used to transmit video service information for the terminal.

It can be understood that function units included in the network device may be configured to perform the method in the second aspect, and specific descriptions may refer to the foregoing descriptions.

According to a seventh aspect, a computer-readable storage medium is provided, including an instruction, and when run on a computer, the instruction enables the computer to perform the method described in the first aspect.

According to an eighth aspect, a computer program product including an instruction is provided. When run on a computer, the program enables the computer to perform the method described in the first aspect.

According to a ninth aspect, a computer-readable storage medium is provided, including an instruction, and when run on a computer, the instruction enables the computer to perform the method described in the second aspect.

According to a tenth aspect, a computer program product including an instruction is provided. When run on a computer, the program enables the computer to perform the method described in the second aspect.

By implementing this application, the network device can know a video quality based on the QoE information reported by the terminal, schedule the radio resources for the video service of the terminal, ensure that a video can be normally played, and improve user experience, so as to improve the QoE.

### BRIEF DESCRIPTION OF DRAWINGS

To describe the technical solutions in this application or in the background more clearly, the following describes the accompanying drawings required by this application or by the background.
FIG. 1 is a diagram of network architecture of a communications system according to this application;
FIG. 2 is a schematic flowchart of a method for obtaining QoE information according to this application;
FIG. 3 is a schematic flowchart of another method for obtaining QoE information according to this application;
FIG. 4 is a schematic diagram of hardware architecture of a terminal according to this application;
FIG. 5 is a schematic diagram of hardware architecture of a network device according to this application; and
FIG. 6 is a schematic structural diagram of a terminal and a network device according to this application.

### DESCRIPTION OF EMBODIMENTS

The following describes this application with reference to the accompanying drawings in this application.

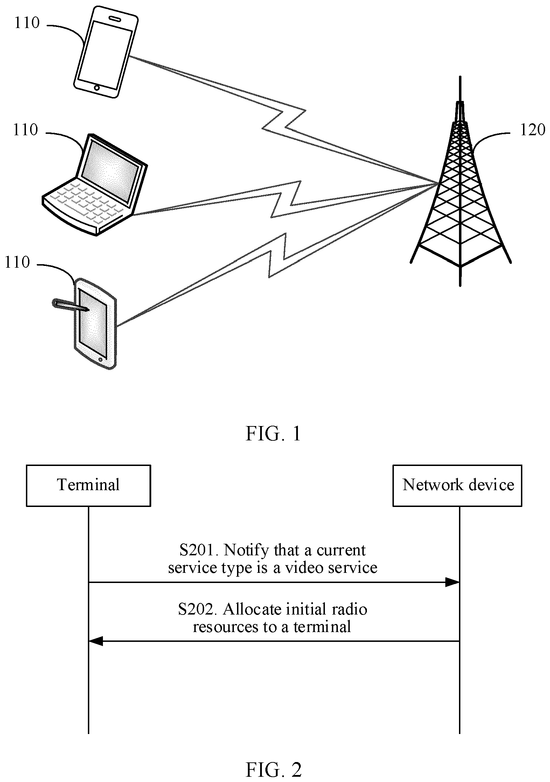

FIG. 1 is a diagram of network architecture of a communications system 100 according to this application. The communications system includes a terminal 110 and a network device 120. The terminal 110 and the network device 120 communicate with each other by using an air interface technology. The air interface technology may include: current 2G (for example, a global system for mobile communications (Global System for Mobile Communications, GSM)), 3G (for example, a universal mobile telecommunications system (Universal Mobile Telecommunications System, UMTS)), wideband code division multiple access (Wideband Code Division Multiple Access, WCDMA), time division-synchronous code division multiple access (Time Division-Synchronous Code Division Multiple Access, TD-SCDMA), 4G (for example, an FDD LTE and a TDD LTE), and a new radio access technology (New Radio Access Technology, New RAT), such as 4.5 G and 5G on the market in the future.

The terminal 110 supports radio transmitting and receiving functions, and cooperates with the network device 120 to provide data service for a user. The terminal 110 may include, but be not limited to, user equipment such as a smart mobile phone that may support a streaming media service, a tablet computer, a media player, a smart television, a smart band, a smart wearable device, an MP3 (Moving Picture Experts Group Audio Layer III, Moving Picture Experts Group Audio Layer III) player, an MP4 (Moving Picture Experts Group Audio Layer IV, Moving Picture Experts Group Audio Layer IV) player, a personal digital assistant (Personal Digital Assistant, PDA), a laptop portable computer, or the like.

The network device 120 may be a device configured to communicate with the terminal 110, for example, may be a BTS (Base Transceiver Station) in the GSM or a CDMA, may be an NB (NodeB) in the WCDMA, or may be an evolved NodeB (evolved NodeB, eNB) in an LTE, a relay station, an in-vehicle device, a wearable device, an access network device (for example, g Node B, gNB) in a future 5G network, an access network device in a future evolved public land mobile network (Public Land Mobile Network, PLMN) network, or the like.

Based on the foregoing communications system, this application provides a method for obtaining QoE information and the method can reflect, by using the QoE information, a video quality, so that a network device can better schedule radio resources based on the QoE information and improve a quality of a communications service.

To better understand this application, two time phases for a video service performed between the terminal and the network device are firstly introduced: one is an initialization phase before the video service is formally transmitted, and the other is a transmission phase in which the video service is formally transmitted.

In the initialization phase, the video service is not transmitted between the terminal and the network device, and preparations may be made for the video service to be formally transmitted later. For example, the network device allocates the radio resources to the terminal.

In the transmission phase, the video service is transmitted between the terminal and the network device, and the transmission phase is a time period between beginning transmitting the video service by the terminal and the network device to finishing transmitting the video service.

FIG. 2 is a schematic flowchart of a method for obtaining QoE information according to this application. The method may be applied in the initialization phase, and the terminal notifies the network device that the video service needs to be initiated currently, so that the network device allocates the radio resources to the terminal. The method may include the following steps:
S201. The terminal notifies the network device that a current service type is the video service.

In this application, the terminal may notify the network device in the following three manners that the current service type is the video service:
Firstly, after the terminal and the network device establish a default bearer (default bearer), the terminal notifies, by using RRC signaling, the network device that the current service type is the video service.

Specifically, after a terminal has an RRC connection setup (RRC connection setup), a core network establishes a default information radio bearer (data radio bearer, DRB) for the terminal, and the default bearer is used in an information service that has small information quantity and low real time. In this application, the default bearer forms an information transmission channel from the core network to the network device to the terminal or in a reversed order. In this case, it can be seen that the terminal and the network device establish the default bearer.

In an optional embodiment, after the terminal and the network device establish a default bearer, the terminal may notify the network device in an event triggering manner that the current service type is the video service. For example, an application (application, APP) run on the terminal may instruct an RRC layer of the terminal to notify, by using the RRC signaling, an RRC layer of the network device that the current service type is the video type.

In an optional embodiment, after the default bearer is established between the terminal and the network device, a service flow ID (flow ID) may be increased in information sent by using the default bearer, and the network device may be notified, by using the service flow ID (flow ID), that the current service type is the video service. A specific service flow, such as a video service, a voice service, or the like, may be distinguished by using different values of the service flow ID. In this application, a specific value of the service flow ID may be prescribed between the terminal and the network device. For example, a value of a video service flow ID may be prescribed as 1. When a service flow ID reported by the terminal to the network device is 1, the network device can know that the current service type is the video service. It should be understood that the foregoing example is merely used to describe this application, but is not intended to constitute limitations.

Secondly, the terminal and the network device establish a dedicated bearer (dedicated bearer), and the terminal notifies, by using a preset flow ID, the network device that the current service type is the video service.

Specifically, after the core network establishes the default bearer for the terminal, the dedicated bearer is established for the terminal if the default bearer cannot meet a current service requirement, and the dedicated bearer is used for service transmission with higher requirements (such as, high speed rate, low latency, and the like). In this application, the dedicated bearer forms an information transmission channel from the core network to the network device to the terminal or in a reversed order. In this case, it can be seen that the terminal and the network device establish the dedicated bearer.

After the terminal and the network device establish a dedicated bearer, the terminal may notify, by using the flow ID, the network device that the current service type is the video service. This is similar to the foregoing embodiment that the terminal notifies, by using the flow ID, the network device that a current service type is the video service. Details are not described herein again.

Thirdly, the terminal reports an initialized data packet type to the network device, so as to notify the network device that the current service type is the video service.

Specifically, the terminal indicates, by using the RRC signaling, the initialized data packet type to the network device. Optionally, the terminal indicates the network device that the initialized data packet type is the video type, that is, may enable the network device to know that the current service type is the video service.

S202. The network device allocates initialized radio resources to the terminal.

Specifically, when knowing that the current service type is the video service, the network device may allocate the initialized radio resources to the terminal that are used in initialized caching of the video service of the terminal. The radio resources may include spectral spectrum resources, time domain resources, and the like.

Furthermore, when the network device knows that the current service type is the video service, radio resources allocated to the terminal is prior to radio resources allocated to other services, to speed up the initialized caching of the video service of the terminal.

Furthermore, when knowing that the current service type is the video service, the network device may allocate the radio resources to the terminal in priority, to speed up the initialized caching of the video service of the terminal.

It can be understood that the foregoing steps S201 to S202 are both performed in the initialization phase.

When the foregoing steps S201 to S202 are implemented, the terminal may perform, by using the radio resources, the initialized caching in the transmission phase after the network device allocates the initialized radio resources to the terminal.

Specifically, when the video service begins, the initialized caching is used by the terminal to ensure that video images watched by the user have a buffer phase, and thereby, run smoothly. It can be understood that the video images cannot be formally presented to the user until the terminal initiates a video service request and the initialized caching is finished.

The terminal uses the initialized radio resources allocated by the network device (allocated in priority or a prior one allocated), which can speed up initialization caching of the video service in the transmission phase, and reduce initialization latency, so that the terminal can initiate the video service more quickly. In terms of user experience, a time length between the user initiating a service requirement and the user actually seeing the video service is decreased, so that user experience can be improved, and the QoE is further improved.

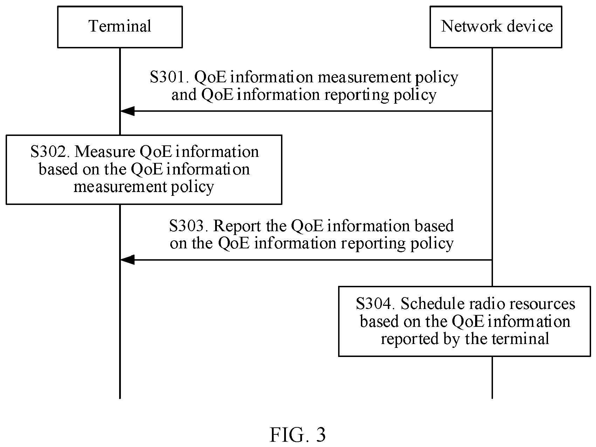

To enable the network device to better perform optimizing and scheduling on the radio resources, this application further provides another method for obtaining QoE information that may be used mainly in a transmission phase. A network device schedules radio resources for a terminal based on a real-time quality of a current video, to improve a video quality and improve user feelings. With reference to FIG. 3, the method may be implemented based on the method shown in FIG. 2, or may be implemented separately from the method shown in FIG. 2. The method may include the following steps:
S301. The network device delivers a QoE information measurement policy and a QoE information reporting policy to a terminal.

Specifically, the network device delivers QoE configuration information to the terminal, where the QoE configuration information includes at least one of the QoE information measurement policy and the QoE information reporting policy. The QoE configuration information may be implemented as RRC signaling.

Specifically, the network device may first deliver the QoE information measurement policy to a terminal, and then deliver the QoE information reporting policy to the terminal.

Specifically, in the transmission phase, the network device may deliver the QoE information measurement policy and the QoE information reporting policy to the terminal. In an optional embodiment, in the initialization phase, the network device may further deliver the QoE information measurement policy and the QoE information reporting policy to a terminal. In practical applications, a specific occasion in which the network device delivers the QoE information measurement policy and the QoE information reporting policy to a terminal may set based on practical requirements.

Specifically, the network device may deliver, by using RRC signaling or a non-access stratum (Non-access stratum, NAS) signaling, the QoE information measurement policy and the QoE information reporting policy to the terminal in a manner of increasing an information type or increasing a field in a current information type when controlling signaling and information exchange with the terminal in the initialization phase or in the transmission phase.

The QoE information measurement policy and the QoE information reporting policy that are delivered by the network device to the terminal may be determined by a network device side based on factors preserved in advance such as user information, network environment, terminal configuration, and the like that are corresponding to the terminal.

In this application, the QoE information measurement policy may include at least one of measurement content and a measurement period, and may further include information such as whether to perform measurement of the QoE information, how to measure the QoE information, and the like. This is not limited in this application. The following describes in detail a case in which the QoE information measurement policy includes the measurement content and the measurement period.

The measurement content in the QoE information measurement policy can reflect a video quality, is a related parameter of the video, and may include one or more of the following items:

### (1) a video cache size

In this case, the video cache size is a size of a video already cached on a current terminal. The measurement unit may be a storage capacity occupied by the cached video, such as KB, M, G, or the like, or may be a playable time length of the cached video, such as a second (second), a minute (minute), or the like.

The video cache size may be a fixed value prescribed between the network device and the terminal, or be related to a current network environment. When the network environment is good, the video cache is relatively great, and when the network environment is terrible, the video cache is relatively little.

### (2) a video total size

In this case, the video total size and the video cache size are similar, and the measurement unit may also be the occupied storage capacity, or the playable length.

The video total size is related to the video and is not affected by any outside factor. For example, a size of a TV episode may be 45 min, and a size of a movie may be 120 min.

### (3) video segment information

In a normal case, an entire video has a relatively long length. Therefore, when providing a video service to the terminal, the network device does not send the entire video to the terminal, to prevent the terminal from exiting when the video plays, which otherwise causes some of video content to be not played, and radio resources that are used to transmit the some of video content not played are wasted. Usually, the network device divides a video into some segments of sub-videos with smaller sizes, and separately sends, in a chronological order, those segments of sub-videos to the terminal. The video segment information means information of those segments of sub-videos.

Specifically, the video segment information may include sizes or starting and stopping times of one or more segment videos, or may simultaneously include sizes and starting and stopping times of one or more segment videos. The measurement unit of the segment videos may also be the occupied storage capacity, or the playable length. The starting and stopping time means a starting time and a stopping time of a segment video in the entire video. For example, a 45-minute entire video may include three segments of sub-videos. Separate sizes and starting and stopping times of the three sub-videos are shown in the following Table 2.

**Table 2**

| Sub-video | Size | Starting and stopping time |
|---|---|---|
| First sub-video | 10 minutes | 0 minute to 10 minute |
| Second sub-video | 15 minutes | 10 minute to 25 minute |
| Third sub-video | 20 minutes | 25 minute to 45 minute |

### (4) a video playing state

In this application, the video playing state may be an urgency state or a non-urgency state. The urgency state presents that a current video is unable to be normally played, and there may be situations, such as stalling, discontinuous images, and the like, that prevents a user from normally watching the video. The non-urgency state presents that the current video can be normally played, and the user is not prevented from normally watching the video.

Optionally, in addition to the foregoing two video states of urgency state and non-urgency state, the video playing state may be divided into more levels. For example, the video playing state may be divided into levels such as very urgent, relatively urgent, normally urgent, and non-urgent, and a current video playing state is determined based on a specific case.

In specific implementation, in addition to the foregoing four measurement content, measurement content in the QoE information measurement policy may further include richer parameter or information related to the video quality, such as a video MOS, a synchronous rate of a voice and an image, and the like. This is not limited in this application.

The measurement period in the QoE information measurement policy is used to indicate a time interval between two quantities of times when the terminal measures the QoE information. For example, if the measurement period is 1 min, the terminal measures the QoE information once every 1 min.

In this application, the QoE information reporting policy may include at least one of reporting content and a reporting period, and may further include information such as whether to perform reporting of the QoE information, how to report the QoE information, and the like. This is not limited in this application. The reporting content and the reporting period in the QoE information reporting policy are similar to the measurement content and the measurement period in the QoE information measurement policy, and reference may be made to the foregoing related content. Details are not described herein again.

S302. The terminal measures the QoE information based on the QoE information measurement policy.

Specifically, the terminal measures, based on the measurement period in the QoE information measurement policy delivered by the network device, measurement content in the QoE information measurement policy at a corresponding time. The following describes a manner, in which the terminal measures the QoE information, as an example.

A cached video is temporarily stored in the terminal. When the measurement content includes the video cache size, the application (application, APP) layer of the terminal stores a size of a corresponding cached video. An RRC layer of the terminal may obtain a parameter of the video cache size in the APP layer in a layer interaction manner.

When providing a video service for the terminal and performing information interaction with the terminal, the network device notifies the terminal a total size of a video requested by a current terminal. Therefore, when the measurement content includes the video total size, the terminal may obtain content of the video total size from the interaction information with the network device.

When providing a video service for the terminal and performing information interaction with the terminal, the network device notifies the terminal of information about some segments of sub-videos. Therefore, when the measurement content includes the video segment information, the terminal may obtain the video segment information from the interaction information with the network device.

When the measurement content includes the video playing state, the terminal may determine a current video playing state based on a specific case. In an optional embodiment, the terminal may determine whether a current video cache size is greater than a first value. If greater than the first value, the current video state is determined to be the non-urgency state, or if less than the first value, the current video state is determined to be the urgency state. In another optional embodiment, the terminal may further determine whether a ratio of a current video cache size to the video total size is greater than a second value. If greater than the second value, the current video state is determined to be the non-urgency state, and if less than the second value, the current video state is determined to be the urgency state. The first value and the second value are both preset by the terminal. In specific implementations, in addition to the foregoing two cases, the terminal may further determine the current video playing state based on other factors.

In addition to the foregoing manner in which the terminal measures the QoE information, the terminal may further measure the QoE information in other manners. This is not limited in this application.

S303. The terminal reports the QoE information to the network device based the QoE information reporting policy.

Specifically, the terminal reports, based on the reporting period in the QoE information reporting policy delivered by the network device, reporting content in the QoE information reporting policy at a corresponding time.

It can be understood that measurement and reporting of the QoE information are independent. The reporting content in the QoE information reporting policy and the measurement policy in the QoE information reporting policy may be different. That is, the network device may request the terminal to measure some content, but not request the terminal to report all measured content. The reporting period in the QoE information reporting policy and the measurement period in the QoE information measurement policy may also be different.

When reporting the QoE information to the network device, the terminal may encapsulate corresponding content as a data packet, and send the data packet to the network device by using a current information type or a newly increased information type.

S304. The network device schedules radio resources based on the QoE information reported by the terminal, and the radio resources are used to transmit video service information for the terminal.

Specifically, the network device analyzes the QoE information reported by the terminal, and adjusts the radio resources allocated to the video service of the terminal. The radio resources may be time domain resources or spectral spectrum resources. Furthermore, when scheduling the radio resources for the terminal, the network device may further perform operations, such as power control, grouping scheduling, traffic control, adaptive coding modulation, radio resources reservation, and the like, on the video service of the terminal.

In this application, the network device schedules the radio resources based on specific content in the QoE information reported by the terminal. The following uses different cases for description.

### (1) The reported QoE information includes the video cache size.

In a case in which the reported QoE information includes the video cache size, when the video cache size is less than a first preset threshold, the radio resources are increased by the network device to transmit video service information of the terminal; or when the video cache size is greater than a first preset threshold, the radio resources are decreased or maintained by the network device to transmit video service information of the terminal. The first preset threshold is preset by the network device.

The foregoing case is equivalent to a case in which the network device schedules more radio resources to support the video service of the terminal when the video cache size is middle or excessively small, to prevent situations such as stalling, discontinuous images, and the like when a video is played; or when the video cache size is relatively great, current video playing of the terminal has no problems, and the network device does not need to schedule more radio resources for the terminal. Therefore, existing radio resources can be fully used.

### (2) The reported QoE information includes the video cache size and the video total size.

In a case in which the reported QoE information includes the video cache size and the video total size, when a ratio of the video cache size to the video total size is less than a second preset threshold, the radio resources allocated to the terminal are increased by the network device to transmit the video service of the terminal; or when a ratio of the video cache size to the video total size is greater than a second preset threshold, the radio resources are decreased or maintained to transmit the video service of the terminal.

Specifically, for example, assuming that the second preset threshold is 70%, and if the video cache size is Is and the video total size is 5s, the radio of the video cache size to the video total size is 20% and is less than the second preset threshold, so that the network device may schedule more radio resources for the terminal; or if the video cache size is Is and the video total size is Is, the radio of the video cache size to the video total size is 100% and is greater than the second preset threshold, so that the network device does not need to schedule more radio resources for the terminal The second preset threshold is preset by the network device.

### (3) The reported QoE information includes the video cache size and the video segment information.

In a case in which the reported QoE information includes the video cache size and the video segment information, the network device calculates the video cache size and a correlation between each sub-video in the video segment information, and adjusts the radio resources to transmit the video service of the terminal.

Specifically, for example, assuming that the video cache size is 15 min and the segment information is shown in foregoing Table 2, it can be known that the video total size is 45 min, and the network device may schedule more radio resources for the terminal to transmit the video service of the terminal; or if the video cache size is 40 min, the network device does not need to schedule more radio resources for the terminal.

It can be understood that the foregoing example is merely exemplary. In specific implementations, the network device may further schedule the radio resources for each sub-video based on the video segment information.

### (4) The reported QoE information includes the video playing state.

In a case in which the reported QoE information includes the video playing state, when the video playing state is the urgency state, the radio resources are increased by the network device to transmit the video service of the terminal; or when the video playing state is the non-urgency state, the radio resources are decreased or maintained by the network device to transmit the video service of the terminal.

It can be understood that the radio resources are maintained by the network device to transmit the video service of the terminal means that the network device does not configure more radio resources to the terminal, and does not decrease the radio resources already configured to the terminal, so that the radio resources used by the terminal to transmit the video service maintains unchanged.

It can be understood that the foregoing steps S302 to S304 are all performed in the transmission phase.

By implementing the method shown in FIG. 3, the network device can know the video quality based on the QoE information reported by the terminal, schedule the radio resources for the video service of the terminal, ensure that a video can be normally played, and improve user experience, so as to improve the QoE.

The method in this application is described in detail above. For ease of better implementing the foregoing solutions in this application, a corresponding apparatus in this application is further provided.

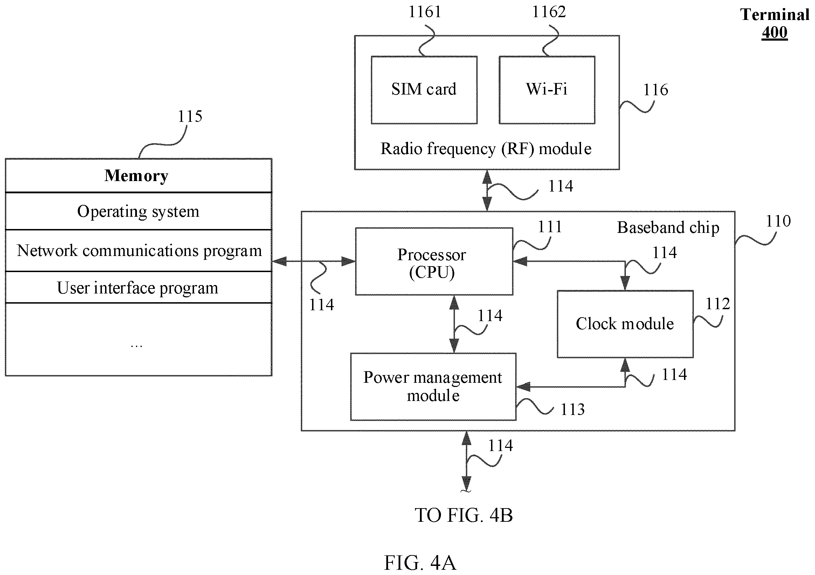

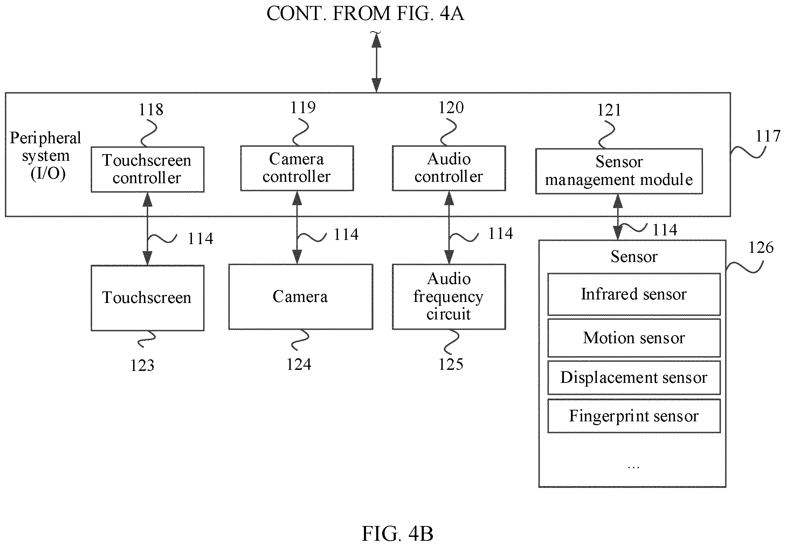

FIG. 4 is a structural block diagram of an implementation of a terminal 400 according to this application. As shown in FIG. 4, the terminal 400 may include: a baseband chip 110, a memory 115 (one or more computer-readable storage mediums), a radio frequency (RF) module 116, and a peripheral system 117. These components may communicate through one or more communications buses 114.

The peripheral system 117 is mainly configured to implement a function of interaction between the terminal 400 and a user/external environment, and mainly includes an input/output apparatus of the terminal 400. In specific implementations, the peripheral system 117 may include: a touchscreen controller 118, a camera controller 119, an audio controller 120, and a sensor management module 121. Each controller may be coupled to a corresponding peripheral device (such as a touchscreen 123, a camera 124, an audio frequency circuit 125, and a sensor 126). It should be noted that the peripheral system 117 may further include another I/O peripheral device.

The baseband chip 110 may include in an integrated manner: one or more processors 111, a clock module 112, and a power management module 113. The clock module 112 integrated in the baseband chip 110 is mainly configured to generate a clock, required by information transmission and timing control, for the processor 111. The power management module 113 integrated in the baseband chip 110 is mainly configured to provide stable and highly precious voltages for the processor 111, the radio frequency module 116, and the peripheral system.

The radio frequency (RF) module 116 is configured to receive and transmit a radio frequency signal, and mainly integrates a receiver and a transmitter of the terminal 400. The radio frequency (RF) module 116 communicates with a communications network and another communications device by using the radio frequency signal. In specific implementations, the radio frequency (RF) module 116 may include but be not limited to: an antenna system, an RF transceiver, one or more amplifiers, a tuner, one or more oscillators, a digital signal processor, a CODEC chip, a SIM card, a storage medium, and the like. In some embodiments, the radio frequency (RF) module 116 may be implemented on a separate chip. In this application, the radio frequency module 116 may be configured to implement information interaction with the network device.

The memory 115 is coupled to the processor 111, and is configured to store various software programs and/or a plurality of sets of instructions. In specific implementations, the memory 115 may include a high-speed random access memory, and may also include a non-volatile memory such as one or more magnetic disk storage devices, a flash memory device, or another non-volatile solid-state storage device. The memory 115 may store an operating system (briefly referred to as a system below), for example, an embedded operating system such as ANDROID, IOS, WINDOWS, LINUX, or the like. The memory 115 may further store a network communications program, and the network communications program may be configured to communicate with one or more adjuncts, one or more terminal devices, and one or more network devices. The memory 115 may further store a user interface program, and the user interface program may visually and vividly display content of an application by using a graphical operation interface, and receive, by using input controls such as a menu, a dialog box, a key, and the like, a control operation of the user for the application.

It should be understood that the terminal 400 is merely an example provided in this application. Moreover, the terminal 400 may have components more or fewer than the shown components, may combine two or more components, or may have different configuration implementations of components.

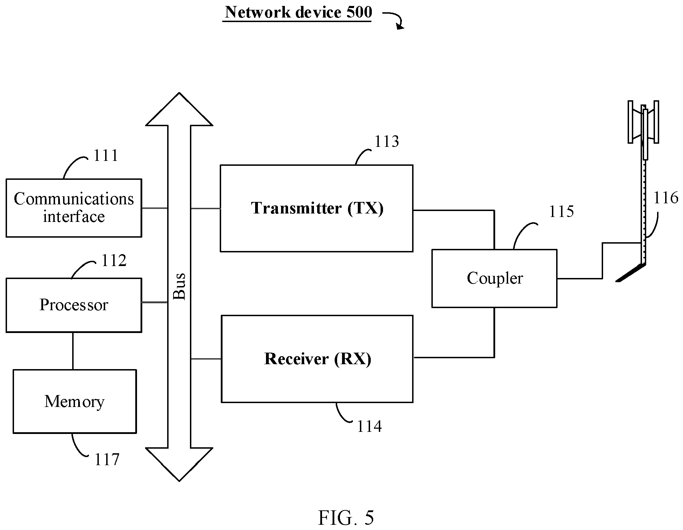

FIG. 5 is a structural block diagram of an implementation of a network device 500 according to this application. The network device may include: a communications interface 111, one or more processors 112, a transmitter 113, a receiver 114, a coupler 115, an antenna 116, and a memory 117. These components may be connected through a bus or in another manner. In FIG. 5, the connection through the bus is used as an example.

The communications interface 111 may be configured for the network device 500 to communicate with another communications device, such as a terminal, another network device, or the like. In specific implementations, the communications interface 111 may be a network communications interface, such as an LTE (4G) communications interface, a 5G communications interface, or a communications interface with a new air interface in the future. In addition to a wireless communications interface, a wired communications interface may further be configured in the network device 500 to support wired communications.

The antenna 116 may be configured to convert electromagnetic energy in a transmission cable into an electromagnetic wave in a free space, or to convert the electromagnetic wave in the free space into the electromagnetic energy in the transmission cable. The coupler 115 may be configured to divide a communications signal into a plurality of branches that are allocated to a plurality of processors 114.

The transmitter 113 may be configured to perform transmission processing on a signal output by the processor 112, and configured to transmit a signal to the terminal or another network device. The receiver 114 may be configured to perform receiving processing on a signal received by the antenna 116, and configured to receive a signal transmitted by the terminal or the another network device. There may both be one or more transmitters 113 and receivers 114.

In this application, the transmitter 113 is configured to send a QoE information measurement policy and a QoE information reporting policy to the terminal.

The memory 117 is coupled to the processor 112, and is configured to store various software programs and/or a plurality of sets of instructions. In specific implementations, the memory 112 may include a high-speed random access memory, and may also include a non-volatile memory such as one or more magnetic disk storage devices, a flash memory device, or another non-volatile solid-state storage device. The memory 112 may store an operating system (system for short as follows), for example, an embedded operating system such as uCOS, VxWorks, RTLinux, or the like. The memory 112 may further store a network communications program, and the network communications program may be configured to communicate with one or more adjuncts, one or more terminal devices, and one or more network devices.

In some embodiments in this application, the memory 112 may be configured to store implementation programs of the method for obtaining QoE information that is provided by one or more embodiments in this application and that is on the network device 500 side. The implementation of the methods for obtaining QoE information provided by one or more embodiments in this application refers to the foregoing embodiments.

The processor 112 may include: an administration module/communication module (administration Module/Communication Module, AM/CM) (configured in a center of speech channel interaction and information interaction), a basic module (Basic Module, BM) (configured to finish calling processing, signaling processing, radio resources management, radio link management and circuit maintain function), a transcoder and submultiplexer (Transcoder and SubMultiplexer, TCSM) unit (configured to finish multiplexing/demultiplexing and transcoder function), and the like.

In this application, the processor 112 may be configured to read and execute a computer-readable instruction. Specifically, the processor 112 may be configured to invoke programs that are stored in the memory 117, for example, the implementation programs of the method for obtaining QoE information that is provided by one or more embodiments in this application and that is on the network device 500 side, and execute instructions included in the program.

In specific implementations, the network device 500 may be a network device in the communications system shown in FIG. 1, and may be implemented as a base transceiver station, a wireless transceiver, a basic service set (BSS), an extended service set (ESS), a NodeB, an eNodeB, and the like. The network device 500 may be implemented as different kinds of base stations, such as a macro base station, a micro base station, and the like.

It should be noted that the network device 500 shown in FIG. 5 is merely an implementation of this application. In practical applications, the network device 500 may further include more or fewer components. This is not limited herein.

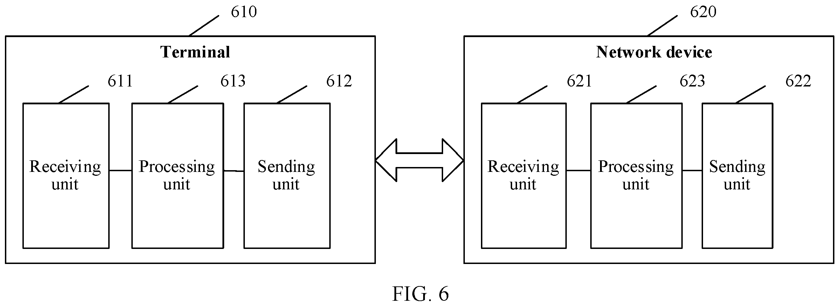

FIG. 6 is a schematic structural diagram of a terminal 610 and a network device 620 according to this application. The terminal 610 and the network device 620 may separately be the communications system shown in FIG. 1, or may be the terminal and the network device shown in the method embodiment in FIG. 2 to FIG. 3.

Firstly, as shown in the figure, the terminal 610 may include: a receiving unit 611, a sending unit 612, and a processing unit 613, where
the receiver 611 is configured to receive a QoE information reporting policy delivered by a network device;
the sending unit 612 is configured to report the QoE information to the network device based on the QoE information reporting policy, so as to enable the network device to schedule radio resources based on the reported QoE information;
in an optional embodiment, the receiving unit 611 is further configured to receive a QoE information measurement policy delivered by the network device; and
the processor unit 613 is configured to measure the QoE information based on the QoE information measurement policy.

It should be understood that the information measurement policy and the reporting and measurement of information may refer to descriptions in the foregoing method embodiment in FIG. 3, and details are not described herein again.

In an optional embodiment, the sending unit 612 is further configured to notify the network device that a current service type is a video service, so as to enable the network device to allocate initialized radio resources to the terminal, where the initialized radio resources are used in initialized caching of the video service of the terminal.

In an optional embodiment, the sending unit 612 may specifically notify, by using RRC signaling, the network device that the current service type is the video service, or notify, by using a preset flow ID, the network device that the current service type is the video service; or
notify, by using a preset flow ID, the network device that the current service type is the video service; or
report an initialized data packet type to the network device, so as to notify the network device that the current service type is the video service.

It should be noted that functions of all functional units of the apparatus 610 in all embodiments of the present invention may be specifically implemented based on the method in the foregoing method embodiments. Specific implementation processes thereof may refer to related descriptions in the foregoing method embodiments shown in FIG. 2 and FIG. 3, and details are not described herein again.

Secondly, shown in the figure, the network device 620 may include: a receiving unit 621, a sending unit 622 and a processing unit 623, where
the sending unit 622 is configured to deliver the QoE information reporting policy to the terminal;
the receiving unit 621 is configured to receive the QoE information reported based on the QoE information reporting policy by the terminal; and
the processing unit 623 is configured to schedule radio resources based on the reported QoE information.

In an optional embodiment, the sending unit 622 is further configured to deliver the QoE information measurement policy to the terminal.

It should be understood that the information measurement policy and the reporting and measurement of information may refer to descriptions in the foregoing method embodiment in FIG. 3, and details are not described herein again.

In an optional embodiment, in a case in which the reporting content includes the video cache size, when the video cache size is less than a first preset threshold, the processing unit 623 is specifically configured to increase radio resources to transmit video service information of the terminal; or when the video cache size is greater than the first preset threshold, the processing unit 623 is specifically configured to decrease or maintain radio resources to transmit the video service information of the terminal.

In an optional embodiment, in a case in which the reporting content includes the video cache size and the video total size, when a ratio of the video cache size to the video total size is less than a second preset threshold, the processing unit 623 is specifically configured to increase the radio resources to transmit video service of the terminal; or when a ratio of the video cache size to the video total size is greater than a second preset threshold, the processing unit 623 is specifically configured to decrease or maintain the radio resources to transmit video service of the terminal.

In an optional embodiment, in a case in which the reporting content includes the video playing state, when the video playing state is an urgency state, the processing unit 623 is specifically configured to increase radio resources to transmit the video service of the terminal; or when the video playing state is a non-urgency state, the processing unit 623 is specifically configured to decrease or maintain radio resources to transmit the video service of the terminal.

In an optional embodiment, the receiving unit 621 is further configured to receive a notification sent by the terminal that a current service type is the video service, and the processing unit 623 is further configured to allocate initialized radio resources to the terminal based on the notification, where the initialized radio resources are used in initialized caching of the video service of the terminal.

In an optional embodiment, the receiving unit 621 is specifically configured to receive, by using the RRC signaling, the notification sent by the terminal that the current service type is the video service, or receive, by using the preset flow ID, the notification sent by the terminal that the current service type is the video service; or receive, by using the preset flow ID, the notification sent by the terminal that the current service type is the video service; or receive an initialized data packet type reported by the terminal.

It should be noted that functions of all functional units of the apparatus 620 in all embodiments of the present invention may be specifically implemented based on the method in the foregoing method embodiments. Specific implementation processes thereof may refer to related descriptions in the foregoing method embodiments in FIG. 2 and FIG. 3, and details are not described herein again.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or an information center to another website, computer, server, or information center in a wired (for example, a coaxial cable, an optical fiber, or a digital subscriber line) or wireless (for example, infrared, radio, and microwave, or the like) manner. The computer-readable storage medium may be any usable medium accessible by the computer, or an information storage device, such as a server, an information center, or the like, integrating one or more usable media. The usable medium may be a magnetic medium (for example, a floppy disk, a hard disk, or a magnetic tape), an optical medium (for example, a DVD), a semiconductor medium (for example, a solid state drive Solid State Disk), or the like.

## Claims

1. A method for obtaining QoE information, comprising:
receiving, by a terminal, a QoE information reporting policy delivered by a network device; and
reporting the QoE information to the network device based on the QoE information reporting policy, so as to enable the network device to schedule radio resources based on the reported QoE information.

2. The method according to claim 1, wherein before the reporting the QoE information to the network device, the method further comprises:
receiving, by the terminal, a QoE information measurement policy delivered by the network device; and
measuring the QoE information based on the QoE information measurement policy.

3. The method according to claim 2, wherein the QoE information measurement policy comprises measurement content, and the measurement content comprises: at least one of a video cache size, a video total size, video segment information, and a video playing state, wherein
the video segment data comprises information of at least one segment, the data of the one segment comprises at least one of a segment size and a starting and stopping time, and the video playing state is an urgency state or a non-urgency state.

4. The method according to any one of claims 1 to 3, wherein the QoE information reporting policy comprises reporting content, and the reporting content comprises: at least one of the video cache size, the video total size, the video segment information, and the video playing state, wherein
video segment data comprises information of at least one segment, data of the one segment comprises at least one of a segment size and a starting and stopping time, and the video playing state is an urgency state or a non-urgency state.

5. The method according to claim 4, wherein the QoE information reporting policy further comprises a reporting period, and the reporting period is used to indicate a period length in which the terminal reports the QoE information to the network device

6. The method according to any one of claims 1 to 5, wherein before the receiving, by a terminal, a QoE information reporting policy delivered by a network device, the method further comprises:
notifying, by the terminal, the network device that a current service type is a video service, so as to enable the network device to allocate initialized radio resources to the terminal, wherein the initialized radio resources are used in initialized caching of the video service of the terminal.

7. The method according to claim 6, wherein the notifying, by the terminal, the network device that a current service type is a video service comprises:
establishing, by the terminal, a default bearer with the network device, and notifying, by using RRC signaling, the network device that the current service type is the video service, or notifying, by using a preset flow ID, the network device that the current service type is the video service; or
establishing, by the terminal, a dedicated bearer with the network device, and notifying, by using a preset flow ID, the network device that the current service type is the video service; or
reporting, by the terminal, an initialized data packet type to the network device, so as to notify the network device that the current service type is the video service.

8. A method for obtaining QoE information, comprising:
delivering, by a network device, a QoE information reporting policy to a terminal;
receiving the QoE information reported based on the QoE information reporting policy by the terminal; and
scheduling radio resources based on the reported QoE information.

9. The method according to claim 8, wherein before the receiving, by the network device, the QoE information reported based on the QoE information reporting policy by the terminal, the method further comprises:
delivering, by the network device, a QoE information measurement policy to the terminal.

10. The method according to claim 9, wherein the QoE information measurement policy comprises measurement content, and the measurement content comprises: at least one of a video cache size, a video total size, video segment information, and a video playing state, wherein
video segment data comprises information of at least one segment, data of the one segment comprises at least one of a segment size and a starting and stopping time, and the video playing state is an urgency state or a non-urgency state.

11. The method according to any one of claims 8 to 10, wherein the QoE information reporting policy comprises reporting content, and the reporting content comprises: at least one of the video cache size, the video total size, the video segment information, and the video playing state, wherein
video segment data comprises information of at least one segment, data of the one segment comprises at least one of a segment size and a starting and stopping time, and the video playing state is an urgency state or a non-urgency state.

12. The method according to claim 11, wherein the QoE information reporting policy further comprises a reporting period, and the reporting period is used to indicate a period length in which the terminal reports the QoE information to the network device.

13. The method according to any one of claim 11 or 12, wherein the scheduling radio resources based on the reported QoE information comprises:
in a case in which the reporting content comprises the video cache size, when the video cache size is less than a first preset threshold, increasing the radio resources to transmit video service information of the terminal; or
when the video cache size is greater than a first preset threshold, decreasing or maintaining the radio resources to transmit video service information of the terminal.

14. The method according to any one of claim 11 or 12, wherein the scheduling radio resources based on the reported QoE information comprises:
in a case in which the reporting content comprises the video cache size and the video total size, when a ratio of the video cache size to the video total size is less than a second preset threshold, increasing the radio resources to transmit a video service of the terminal; or
when the ratio of the video cache size to the video total size is greater than a second preset threshold, decreasing or maintaining the radio resources to transmit a video service of the terminal.

15. The method according to any one of claim 11 or 12, wherein the scheduling radio resources based on the reported QoE information comprises:
in a case in which the reporting content comprises the video playing state, when the video playing state is an urgency state, increasing the radio resources to transmit a video service of the terminal; or
when the video playing state is a non-urgency state, decreasing or maintaining the radio resources to transmit a video service of the terminal.

16. The method according to any one of claims 8 to 15, wherein before the delivering, by a network device, a QoE information reporting policy to a terminal, the method further comprises:
receiving a notification sent by the terminal that a current service type is a video service, so as to allocate initialized radio resources to the terminal based on the notification, wherein the initialized radio resources are used in initialized caching of the video service of the terminal.

17. The method according to claim 16, wherein the receiving a notification sent by the terminal that a current service type is a video service comprises:
establishing, by the network device, a default bearer with the terminal, and receiving, by using RRC signaling, the notification sent by the terminal that the current service type is the video service, or receiving, by using a preset flow ID, the notification sent by the terminal that the current service type is the video service; or
establishing, by the network device, a dedicated bearer with the terminal, and receiving, by using a preset flow ID, the notification sent by the terminal that the current service type is the video service; or
receiving, by the network device, an initialized data packet type sent by the terminal, so as to know that the current service type is the video service.

18. A terminal, comprising a transmitter and a receiver, wherein
the receiver is configured to receive a QoE information reporting policy delivered by a network device; and
the transmitter is configured to report QoE information to the network device based on the QoE information reporting policy, so as to enable the network device to schedule radio resources based on the reported QoE information.

19. The terminal according to claim 18, wherein the terminal further comprises a processor,
the receiver is further configured to receive a QoE information measurement policy delivered by a network device; and
the processor is configured to measure the QoE information based on the QoE information measurement policy.

20. The terminal according to claim 19, wherein the QoE information measurement policy comprises measurement content, and the measurement content comprises: at least one of a video cache size, a video total size, video segment information, and a video playing state, wherein
video segment data comprises information of at least one segment, data of the one segment comprises at least one of a segment size and a starting and stopping time, and the video playing state is an urgency state or a non-urgency state.

21. The terminal according to any one of claims 18 to 20, wherein the QoE information reporting policy comprises reporting content, and the reporting content comprises: at least one of the video cache size, the video total size, the video segment information, and the video playing state, wherein
video segment data comprises information of at least one segment, data of the one segment comprises at least one of a segment size and a starting and stopping time, and the video playing state is an urgency state or a non-urgency state.

22. The terminal according to claim 21, wherein the QoE information reporting policy further comprises a reporting period, and the reporting period is used to indicate a period length in which the terminal reports the QoE information to the network device.

23. The terminal according to any one of claims 18 to 22, wherein the transmitter is further configured to notify the network device that a current service type is a video service, so as to enable the network device to allocate initialized radio resources to the terminal, wherein the initialized radio resources are used in initialized caching of the video service of the terminal.

24. The terminal according to claim 23, wherein
the transmitter is specifically configured to notify, by using RRC signaling, the network device that the current service type is the video service, or notify, by using a preset flow ID, the network device that the current service type is the video service; or
the transmitter is specifically configured to notify, by using a preset flow ID, the network device that the current service type is the video service; or
The transmitter is specifically configured to report an initialized data packet type to the network device, so as to notify the network device that the current service type is the video service.

25. A network device, comprising a transmitter, a receiver and a processor, wherein the transmitter is configured to deliver a QoE information reporting policy to a terminal;
the receiver is configured to receive QoE information reported based on the QoE information reporting policy by the terminal; and
the processor is configured to schedule radio resources based on the reported QoE information.

26. The network device according to claim 25, wherein the transmitter is further configured to deliver a QoE information measurement policy to the terminal.

27. The network device according to claim 26, wherein the QoE information measurement policy comprises measurement content, and the measurement content comprises: at least one of a video cache size, a video total size, video segment information, and a video playing state, wherein
video segment data comprises information of at least one segment, data of the one segment comprises at least one of a segment size and a starting and stopping time, and the video playing state is an urgency state or a non-urgency state.

28. The network device according to any one of claims 25 to 27, wherein the QoE information reporting policy comprises reporting content, and the reporting content comprises: at least one of the video cache size, the video total size, the video segment information, and the video playing state, wherein
video segment data comprises information of at least one segment, data of the one segment comprises at least one of a segment size and a starting and stopping time, and the video playing state is an urgency state or a non-urgency state.

29. The network device according to claim 28, wherein the QoE information reporting policy further comprises a reporting period, and the reporting period is used to indicate a period length in which the terminal reports the QoE information to the network device.

30. The network device according to any one of claim 28 or 29, wherein in a case in which the reporting content comprises the video cache size, when the video cache size is less than a first preset threshold, the processor is specifically configured to increase the radio resources to transmit video service information of the terminal; or
when the video cache size is greater than a first preset threshold, the processor is specifically configured to decrease or maintain the radio resources to transmit video service information of the terminal.

31. The network device according to any one of claim 28 or 29, wherein in a case in which the reporting content comprises the video cache size and the video total size, when a ratio of the video cache size to the video total size is greater than a second preset threshold, the processor is specifically configured to increase the radio resources to transmit a video service of the terminal; or
when the ratio of the video cache size to the video total size is less than a second preset threshold, the processor is specifically configured to decrease or maintain the radio resources to transmit a video service of the terminal.

32. The network device according to any one of claim 28 or 29, wherein in a case in which the reporting content comprises the video playing state, when the video playing state is an urgency state, the processor is specifically configured to increase the radio resources to transmit a video service of the terminal; or
when the video playing state is a non-urgency state, the processor is specifically configured to decrease or maintain the radio resources to transmit a video service of the terminal.

33. The network device according to any one of claims 25 to 32, wherein
the receiver is further configured to receive the notification sent by the terminal that the current service type is the video service; or
the processor is further configured to allocate initialized radio resources to the terminal based on the notification, wherein the initialized radio resources are used in initialized caching of the video service of the terminal.

34. The network device according to claim 33, wherein
the receiver is specifically configured to receive RRC signaling sent by the terminal, and the RRC signaling is used to notify the network device that the current service type is the video service, or to receive a flow ID sent by the terminal, wherein the flow ID is used to notify the network device that the current service type is the video service; or
the receiver is specifically configured to receive a flow ID sent by the terminal, wherein flow ID is used to notify the network device that the current service type is the video service; or
to receive an initialized data packet type sent by the terminal.
